# DEMANDE DE BREVET EUROPEEN

(11) **EP 4 174 779 A1**
(43) Date de publication de la demande: **03.05.2023**
(21) Numéro de dépôt: 22203773.1
(22) Date de dépôt: 26.10.2022
(51) Int. Cl.: G06T 7/80, G01S 7/497, G06V 20/58

(54) **PROCÉDÉ DE CALIBRATION AUTOMATIQUE DES PARAMÈTRES EXTRINSÈQUES D'UN RÉSEAU DE CAMÉRAS OPTIQUES; PRODUIT PROGRAMME D'ORDINATEUR, SYSTÈME DE VISION PAR ORDINATEUR ET VÉHICULE AUTOMOBILE ASSOCIÉS**

(30) Priorité: 26.10.2021 FR 2111362
(71) Demandeur: Commissariat à l'énergie atomique et aux énergies alternatives, 75015 Paris (FR)
(72) Inventeur: BELISSEN, Valentin, 91191 GIF-SUR-YVETTE CEDEX (FR); CHABOT, Florian, 91191 GIF-SUR-YVETTE CEDEX (FR); PHAM, Quoc Cuong, 91191 GIF-SUR-YVETTE CEDEX (FR)
(74) Mandataire: Lavoix

(57) **Abrégé**

Ce procédé, mis en œuvre pour un réseau de caméras comportant des première et seconde caméras (11, 12), rigidement liées et à champs d'observation recouvrants, consiste à : reconstruire une première scène à partir d'une première image (11) acquise par la première caméra (11), d'un premier modèle d'estimation de cartes de profondeur denses métriques et d'un modèle optique de la première caméra ; reconstruire une seconde scène à partir d'une seconde image (I2) acquise par la seconde caméra (12), d'un second modèle d'estimation de cartes de profondeur denses métriques et d'un modèle optique de la seconde caméra ; déterminer les valeurs optimales des variables d'une transformation rigide permettant de superposer les première et seconde scènes (S1, S2) ; et, mémoriser les valeurs optimales déterminées en tant que valeurs des paramètres extrinsèques entre les première et seconde caméras.

## Description

La présente invention a pour domaine général celui de la vision par ordinateur. Elle concerne plus particulièrement un procédé de calibration automatique des paramètres extrinsèques d'un réseau de caméras optiques, rigidement liées, et à champs d'observation recouvrants.

La calibration des différentes caméras d'un système de vision par ordinateur est une étape préalable importante avant tout traitement fiable des images acquises.

Une telle calibration nécessite la détermination de la valeur de paramètres intrinsèques, qui sont inhérents à chaque caméra, et la valeur de paramètres extrinsèques, qui dépendent de la position de chaque caméra dans l'espace.

La présente invention est dédiée à la calibration des paramètres extrinsèques.

Il s'agit donc de déterminer les six paramètres permettant de définir parfaitement la position et l'orientation d'une caméra par rapport à un repère de référence : trois paramètres de position du centre optique de la caméra et trois paramètres d'orientation d'un repère lié à la caméra (constitué de préférence par l'axe optique de la caméra et par un plan de formation des images, qui est orienté et perpendiculaire à l'axe optique de la caméra).

Le repère de référence par rapport auquel évaluer les paramètres extrinsèques du réseau de caméras est un repère commun par rapport auquel les paramètres de calibration de différentes caméras du réseau sont définis. Il peut notamment s'agir d'un repère associé à une caméra particulière du réseau.

Selon l'état de la technique, la calibration des paramètres extrinsèques nécessite l'utilisation de capteurs additionnels ou d'équipements coûteux, avec des procédés réalisables seulement en environnement contrôlé.

Par exemple, le document US 11 019 330 B2 divulgue un procédé de calibration des paramètres extrinsèques de deux caméras optiques. Ce procédé consiste d'abord à identifier des points d'intérêt dans chacune des deux images acquises au même instant par les deux caméras optiques. Ce procédé se poursuit en appariant chaque point d'intérêt de la première image avec un point d'intérêt de la seconde image pour former un ensemble de couples de points. Enfin, ce procédé met en œuvre un processus d'optimisation d'une distance géométrique sur l'ensemble des paires de points afin de déterminer les paramètres extrinsèques entre les deux caméras.

Par exemple encore, l'article JUNZHI GUAN ET AL: "Extrinsic Calibration of Camera Networks Based on Pedestrians", SENSORS, vol. 16, no. 5, 9 mai 2016, page 654 divulgue la détermination des paramètres extrinsèques d'un système de vision par ordinateur comportant deux caméras rigidement liées, via l'observation d'une personne. L'image acquise pas une caméra est traitée en associant une ellipse au profil de la personne et en estimant la position tridimensionnelle des points d'extrémité de cette ellipse dans un repère lié à la caméra d'acquisition. La comparaison des positions des deux points d'extrémité d'une caméra à l'autre permet de déterminer les paramètres de la transformation rigide pour passer du repère de la première caméra à celui de la seconde caméra, c'est-à-dire les paramètres extrinsèques recherchés.

Les documents WO 2021/100043 A2 et WO 2018/196001 A1 divulgue des procédés similaires nécessitant l'identification de points d'intérêts dans chaque image.

Une tel procédé reste complexe à mettre en oeuvre et coûteux en temps de calcul. L'identification de points d'intérêt dans la scène observée par l'une ou l'autre des caméras peut s'avérer difficile à réaliser quand les conditions de luminosité sont dégradées. De plus, l'appariement des points d'intérêt d'une image à l'autre peut être difficile à réaliser lorsque les points de vue des deux caméras diffèrent fortement.

Un autre problème réside dans l'évolution au cours du temps de la position et/ou de l'orientation relative des caméras, même considérées comme rigidement liées, par exemple sous l'effet des vibrations affectant le système de vision par ordinateur. Les procédés de calibrage selon l'état de la technique ne sont alors pas adaptés (ou tout au moins pas optimisés) pour un tel problème de recalibration.

Le but de la présente invention est de résoudre ces problèmes, notamment en proposant un procédé de calibration automatique particulièrement simple à mettre en œuvre, permettant en outre de recalibrer facilement et en temps réel les caméras optiques d'un système de vision par ordinateur, la mise en oeuvre du procédé se faisant sans aucun dispositif additionnel particulier.

Pour cela l'invention a pour objet un procédé de calibration automatique des paramètres extrinsèques d'un réseau de caméras optiques comportant au moins une paire de caméras optiques, ladite paire de caméras optiques comportant une première caméra optique et une seconde caméra optique, rigidement liées l'une par rapport à l'autre et à champs d'observation recouvrants, le procédé étant caractérisé en ce qu'il comporte les étapes consistant à, alors que l'on dispose d'un premier modèle d'estimation de cartes de profondeur denses métriques pour la première caméra et/ou d'un second modèle d'estimation de cartes de profondeur denses métriques pour la seconde caméra : reconstruire une première scène tridimensionnelle à partir d'une première portion d'une première image acquise par la première caméra à un instant considéré, du premier modèle d'estimation de cartes de profondeur denses métriques et d'un modèle optique de la première caméra et/ou reconstruire une seconde scène tridimensionnelle à partir d'une seconde portion de la seconde image acquise par la seconde caméra à l'instant considéré, du second modèle d'estimation de cartes de profondeur denses métriques et d'un modèle optique de la seconde caméra, la première portion de la première image et la seconde portion de la seconde image définissant respectivement des champs d'observation élémentaires qui se recouvrent mutuellement au moins partiellement, et la première portion de la première image et la seconde portion de la seconde image comportant chacune une pluralité de pixels adjacents formant un ensemble dense de pixels ; déterminer les valeurs optimales des variables soit d'une transformation rigide permettant de superposer les première et seconde scènes tridimensionnelles reconstruites, soit d'une transformation de reprojection permettant d'aligner la portion de la première image et une portion d'une seconde image reprojetée obtenue à partir de la seconde scène tridimensionnelle et du modèle optique de la première caméra et/ou la portion de la seconde image et une portion d'une première image reprojetée obtenues à partir de la première scène tridimensionnelle et du modèle optique de la seconde caméra ; et mémoriser les valeurs optimales déterminées en tant que valeurs des paramètres extrinsèques entre les première et seconde caméras.

Suivant des modes particuliers de réalisation, le procédé comporte une ou plusieurs des caractéristiques suivantes, prises isolément ou suivant toutes les combinaisons techniquement possibles :
- déterminer les valeurs optimales des variables d'une transformation rigide consiste à minimiser une fonction de coût fondée sur une distance euclidienne entre les points d'un couple de points d'une pluralité de couples de points, chaque couple de points associant un point de la première scène tridimensionnelle et un point de la seconde scène tridimensionnelle.
- la fonction de coût est fondée non seulement sur la distance euclidienne entre les points d'un couple de points d'une pluralité de couples de points, mais également sur une intensité des pixels associés auxdits points.
- déterminer les valeurs optimales des variables d'une transformation de reprojection consiste à minimiser une fonction de coût fondée sur une erreur photométrique entre la première portion de la première image et la seconde portion de la seconde image reprojetée et/ou la seconde portion de la seconde image et la première portion de la première image reprojetée.
- une carte de profondeur denses métriques parmi les première et seconde cartes de profondeur denses métriques, élaborée à partir d'une portion d'image parmi les première et seconde portions des première et seconde images, associe une information de profondeur à chaque pixel de la portion d'image correspondante.
- les paramètres extrinsèques comportent des coordonnées de position et d'orientation relatives entre un repère lié à la seconde caméra et un repère lié à la première caméra.
- une caméra optique parmi les première et seconde caméras est une caméra couleur, une caméra niveaux de gris ou une caméra infra-rouge.
- la reconstruction d'une scène tridimensionnelle s'effectue directement sur une portion d'image acquise par une caméra, sans avoir préalablement identifié des points d'intérêts particuliers dans ladite portion d'image.

L'invention a également pour objet un produit programme d'ordinateur comportant des instructions logicielles qui, lorsqu'elles sont exécutées par un calculateur, mettent en œuvre le procédé de calibration automatique précédent.

L'invention a également pour objet un système de vision par ordinateur comprenant un réseau de caméras optiques comportant au moins une paire de caméras optiques, ladite paire de caméras optiques comportant une première caméra optique et une seconde caméra optique, rigidement liées l'une par rapport à l'autre et à champs d'observation recouvrants ; et un calculateur, caractérisé en ce que le calculateur est configuré pour mettent en œuvre le procédé de calibration automatique précédent afin de calibrer ou de recalibrer les paramètres extrinsèques entre les première et seconde caméras optiques.

L'invention a finalement pour objet un véhicule automobile, caractérisé en ce qu'il est équipé du système de vision par ordinateur précédent.

L'invention et ses avantages seront mieux compris à la lecture de la description détaillée qui va suivre de deux modes de réalisation particulier, donnés uniquement à titre d'exemple non limitatif, cette description étant faite en se référant aux dessins annexés sur lesquels :
[Fig 1] La figure 1 est une représentation schématique d'un système de vision par ordinateur équipant un véhicule automobile, le système comportant des première et seconde caméras optiques, rigidement liées, et à champs d'observation recouvrants ;
[Fig 2] La figure 2 est une représentation sous forme de blocs d'un premier mode de réalisation du procédé de calibration automatique selon l'invention, mis en œuvre par un calculateur du système de la figure 1 ;
[Fig 3] La figure 3 est une vue de dessus d'une scène observée par le système de vision par ordinateur de la figure 1 ;
[Fig 4] La figure 4 est une représentation d'une image acquise par la première caméra et d'une image acquise par la seconde caméra, lors de l'observation par le système de la figure 1 de la scène de la figure 3 ;
[Fig 5] La figure 5 est une vue de dessus superposant des première et seconde scènes tridimensionnelles de l'environnement reconstruites à partir des images de la figure 4, respectivement pour les première et seconde caméras ;
[Fig 6] La figure 6 est une représentation sous forme de blocs d'un second mode de réalisation du procédé de calibration automatique selon l'invention, mis en œuvre par un calculateur du système de la figure 1 ; et,
[Fig 7] La figure 7 est une représentation d'une image acquise par la première caméra et d'une image acquise par la seconde caméra puis reprojetée dans le repère optique de la première caméra, lors de l'observation par le système de la figure 1 de la scène de la figure 3.

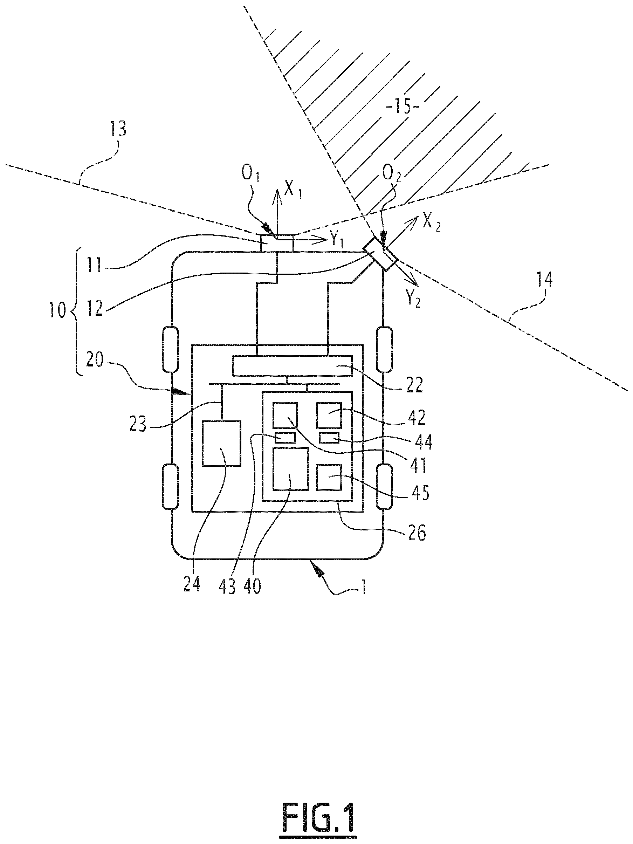

La figure 1 représente un système de vision par ordinateur 10, qui est par exemple embarqué à bord d'un véhicule automobile 1, comme une voiture de tourisme.

Le système 10 comporte :
- une première caméra optique 11 ;
- une seconde caméra optique 12 ; et,
- un calculateur 20.

Les première et seconde caméras, 11 et 12, sont de préférence identiques. Elles sont équipées de la même optique et fonctionnent selon la même modalité (couleur RGB, niveaux de gris, infra-rouge - IR,...). En variante, les caméras sont différentes optiquement et/ou dans leur modalité de fonctionnement.

Les première et seconde caméras, 11 et 12, sont des caméras optiques, qui sont uniquement propres à acquérir des images de l'environnement. Il ne s'agit pas de capteurs hybrides associant à un moyen d'acquisition d'images optiques, un capteur de distance, du type LIDAR (selon l'anglais « Light Détection and Ranging ») par exemple.

A la première caméra optique 11 est associé un premier repère (O1 ; X1, Y1, Z1), où O1 correspond au centre optique de la première caméra, où X1 correspond à l'axe optique de la première caméra, et où Y1 et Z1 définissent le plan de formation des images de la première caméra. La première caméra 11 est propre à observer un premier champ d'observation 13. La première caméra 11 délivre périodiquement une première image I1, par exemple en niveaux de gris, de la scène observée.

De manière similaire, à la seconde caméra optique 12 est associé un second repère (O2, X2, Y2, Z2). La seconde caméra 12 est propre à observer un second champ d'observation 14. La seconde caméra 12 délivre périodiquement une seconde image I2, par exemple en niveaux de gris, de la scène observée.

Par exemple, la première caméra 11 est une caméra frontale, qui est montée à l'avant du véhicule automobile 1, tandis que la seconde caméra 12 est une caméra latérale, qui est montée sur l'aile droite du véhicule automobile 1.

Les caméras 11 et 12 sont solidaires de la caisse du véhicule 1. Elles sont donc considérées comme fixes l'une par rapport à l'autre.

Les caméras 11 et 12 sont disposées de sorte que les premier et second champs d'observation, 13 et 14, se recouvrent au moins partiellement sur un domaine commun 15.

Le calculateur 20 est un ordinateur comportant une interface d'entrée/sortie 22, des moyens de calcul, tels qu'un processeur 24, des moyens de mémorisation, tels qu'une mémoire 26, et un bus de communication 23 reliant l'interface 22, le processeur 24 et la mémoire 26 entre eux.

Les première et seconde caméras, 11 et 12, sont connectées à l'interface d'entrée/sortie 22 du calculateur 20. On considère que les première et seconde caméras, 11 et 12, sont synchronisées, c'est-à-dire que les première et seconde images acquises à l'instant courant et délivrées en entrée du calculateur 20 correspondent à une observation de l'environnement par les deux caméras, 11 et 12, au même instant. Le calculateur 20 reçoit donc, à chaque pas de temps, une paire d'images constituée d'une première image I1 acquise par la première caméra 11 et d'une seconde image I2 acquise par la seconde caméra 12.

La mémoire 26 stocke les instructions de programmes d'ordinateurs, en particulier les instructions d'un programme 40 dont l'exécution permet la mise en œuvre du procédé de calibration automatique selon l'invention.

La mémoire 26 stocke également un premier modèle d'estimation de cartes de profondeur denses métriques 41 pour la première caméra 11 et un second modèle d'estimation de cartes de profondeur denses métriques 42 pour la seconde caméra 12. Lorsque les deux caméras sont identiques, un seul modèle d'estimation commun aux deux caméras peut être utilisé.

La mémoire 26 stocke également un premier modèle optique 43 pour la première caméra 11 et un second modèle optique 44 pour la seconde caméra 12. Un modèle optique d'une caméra définit les propriétés optiques de cette dernière, en particulier ses paramètres intrinsèques. Lorsque les deux caméras sont identiques, un seul modèle optique commun aux deux caméras peut être utilisé.

La mémoire 26 comporte également un espace 45 pour mémoriser les valeurs de chacun des paramètres extrinsèques associés à la paire de caméras 11 et 12, telles que déterminées à l'issue d'une itération de l'exécution du procédé selon l'invention.

### PREMIER MODE DE REALISATION

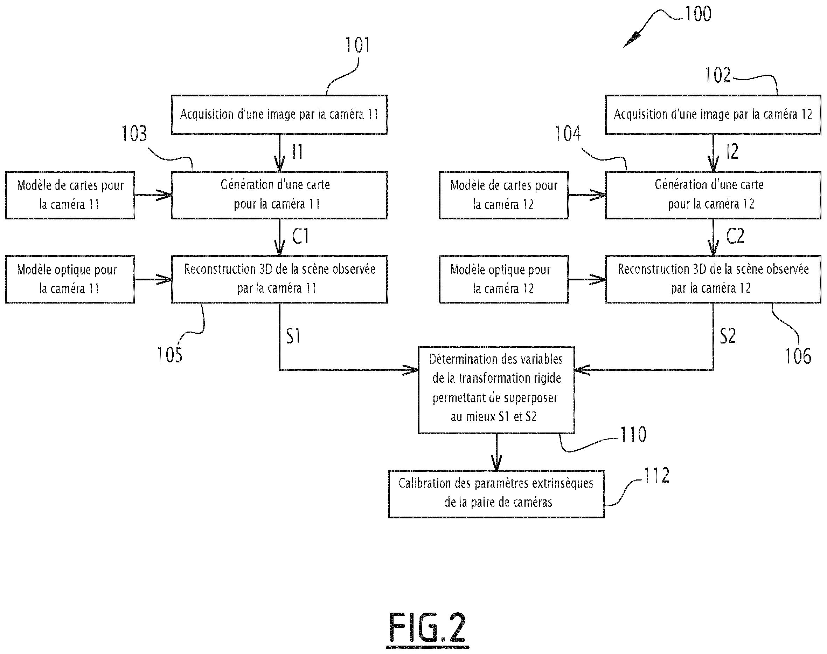

Un premier mode de réalisation du procédé de calibration automatique selon l'invention est illustré sur la figure 2.

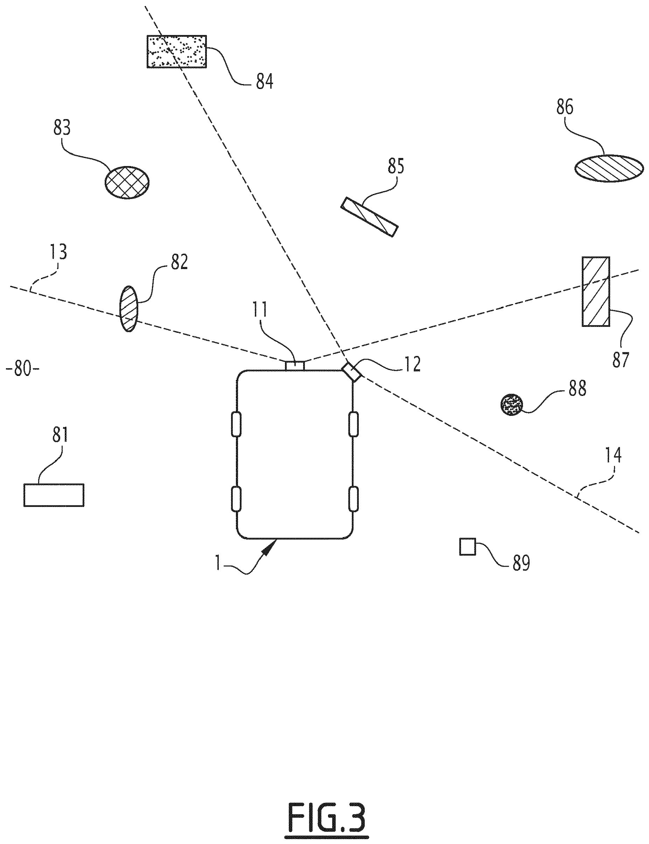

Ce procédé 100 sera décrit en référence au cas d'usage illustré sur les figures 3 à 5.

Pour plus de clarté, la scène observée est réduite à une scène à deux dimensions et les images acquises sont à une dimension. Dans ce cas, les paramètres extrinsèques entre les deux caméras se limitent à deux paramètres de position et à un paramètre d'orientation. Mais, de manière plus générale, la scène observée est à trois dimensions et les images acquises sont à deux dimensions. Les paramètres extrinsèques entre les deux caméras comportent alors trois paramètres de position et trois paramètres d'orientation.

Comme représenté en vue de dessus à la figure 3, le véhicule automobile 1 se déplace dans un environnement 80 contenant différents objets, référencés 81 à 89. Il peut s'agir de n'importe quel type d'objet, notamment des obstacles pour le véhicule automobile 1.

Le procédé 100 nécessite de disposer au minimum d'une image par caméra, ces images étant acquises au même instant dans le cas où le système de vision par ordinateur 10 est porté par une plateforme mobile.

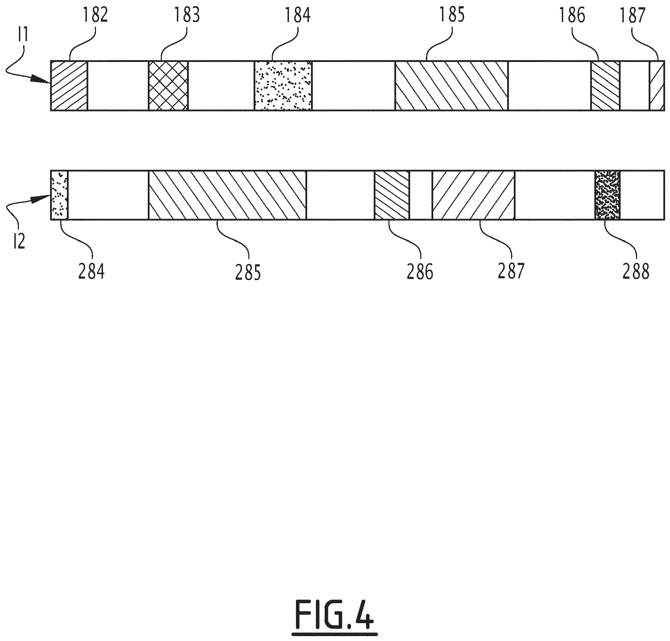

A l'étape 101, la première caméra 11 acquière une première image I1 de la scène observée. Pour la situation de la figure 3, cette première image I1 est représentée sur la partie haute de la figure 4. Les objets 82 et 87 qui se situent au moins partiellement dans le champ d'observation 13 sont vus par la première caméra 11 et les représentations de chacun de ces objets se retrouvent dans la première image I1. Ces représentations d'objet sont référencées respectivement 182 à 187.

A l'étape 102, la seconde caméra 12 acquière une seconde image I2 de la scène observée. Pour la situation de la figure 3, cette seconde image I2 est représentée sur la partie basse de la figure 4. Les objets 84 et 88 qui se situent au moins partiellement dans le champ d'observation 14 sont vus par la seconde caméra 12 et les représentations de chacun de ces objets se retrouvent dans la seconde image I2, où elles sont référencées respectivement 284 à 288.

On considère que l'on dispose, pour chaque caméra, d'un modèle d'estimation de cartes de profondeur denses métriques.

Un tel modèle d'estimation permet, à partir d'une unique image acquise par une caméra, de reconstruire l'information de profondeur qui a été perdue lors de la projection des objets observés sur le plan de formation des images de la caméra.

Le qualificatif de « dense » indique que l'information de profondeur est reconstruite pour chaque pixel de l'image et non pas seulement pour certains pixels associés par exemple à des points d'intérêt identifiés dans l'image acquise.

Le qualificatif de « métrique » indique que l'information de profondeur est reconstruite sans ambiguïté de facteur d'échelle, lié par exemple à la méthode d'obtention du modèle d'estimation de cartes de profondeur.

Le modèle d'estimation de cartes de profondeur denses métriques d'une caméra peut par exemple être obtenu via un apprentissage automatique, comme cela est présenté dans l'article de Vitor Guizilini et al, "Robust Semi-Supervised Monocular Depth Estimation with Reprojected Distances", arXiv:1910.01765v3 [cs.CV] 19 Nov 2019, ou encore dans l'article de Varun Ravi Kumar et al, "FisheyeDistanceNet: Self-Supervised Scale-Aware Distance Estimation using Monocular Fisheye Camera for Autonomous Driving", arXiv:1910.04076v4 [cs.CV] 6 Oct 2020.

Le modèle d'estimation d'une caméra est par exemple fourni par le constructeur de cette caméra. Il est chargé dans la mémoire du calculateur 20.

Selon l'invention, on utilise d'abord un modèle d'estimation de cartes de profondeur dense métrique pour générer une carte de profondeur à partir d'une image acquise par la caméra, puis ensuite un modèle optique de la caméra pour reconstruire la scène tridimensionnelle observée par la caméra à partir de la carte de profondeur générée.

Ainsi, à l'étape 103, le modèle d'estimation de cartes de profondeur 41 de la première caméra 11 est lu dans la mémoire 26 et est utilisé pour générer une première carte de profondeur dense métrique, C1, à partir de l'image I1. La carte C1 associe à chaque pixel p de l'image I1 une distance d(p) entre le point physique M(p) se projetant en p et le centre optique O₁ de la première caméra 11.

La première carte C1 est alors utilisée, à l'étape 105 pour reconstruire une première scène tridimensionnelle S1. Plus précisément, à l'étape 105, le premier modèle optique 43 de la première caméra 11 est lu dans la mémoire 26. Ce modèle optique définit notamment les paramètres intrinsèques de la première caméra 11. Le modèle optique de la première caméra 11 donne, pour chaque pixel, le vecteur unitaire r(p) indiquant la direction du rayon optique passant par O₁ qui se projette sur le pixel p. La reconstruction de la première scène S1 dans le repère de la première caméra s'effectue alors simplement en multipliant la distance d(p) donnée par la première carte C1, avec le vecteur unitaire r(p) donné par le premier modèle optique. Le vecteur position O₁M(p) s'écrit alors : O₁M(p) = d(p) x r(p).

Il est à noter que l'estimation de carte de profondeur dense métrique se faisant dans le repère propre de la caméra, il n'est pas nécessaire de connaître les paramètres extrinsèques de la caméra pour reconstruire l'environnement à partir d'une image acquise par cette caméra.

Une carte de profondeur permettant de reconstruire une information de profondeur pour tous les pixels de l'image, mais elle ne contient plus l'information de couleur (RGB par exemple). Ainsi, l'étape 105 est avantageusement modifiée pour prendre en entrée non seulement la première carte C1 mais également la première image I1, afin que la première scène S1 reconstruite comporte également une information de couleur.

De manière similaire, à l'étape 104, le modèle d'estimation de cartes de profondeur 42 pour la seconde caméra 12 est lu dans la mémoire 26 et est utilisé pour générer une seconde carte de profondeur dense métrique, C2, à partir de l'image I2 acquise par la seconde caméra 12.

Puis, à l'étape 106, le second modèle optique 44 de la seconde caméra 12 est lu dans la mémoire 26 et est utilisé pour reconstruire, à partir de la seconde carte de profondeur dense métrique, C2, et, éventuellement, de la seconde image I2, une seconde scène tridimensionnelle S2 correspondant à la scène observée par la seconde caméra 12.

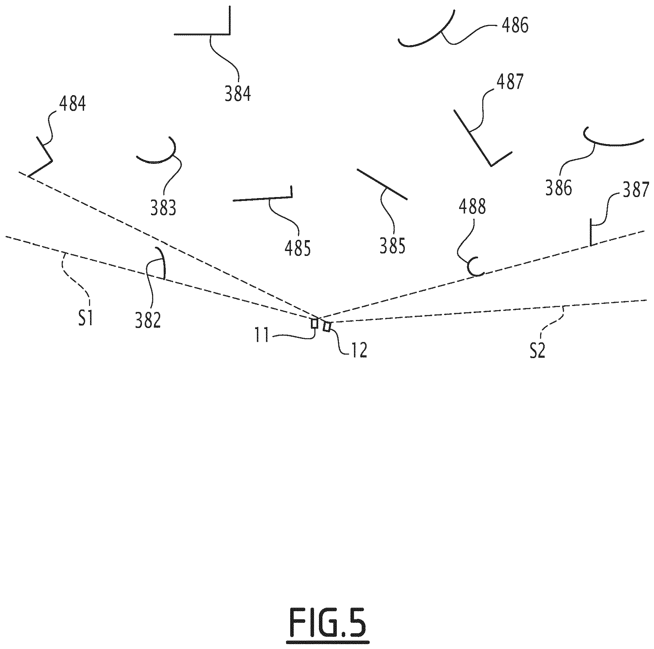

Les première et seconde scènes, S1 et S2, obtenues à l'issue des étapes 105 et 106 pour la situation de la figure 3 sont représentées sur la figure 5, en superposition l'une sur l'autre.

A chaque image d'un d'objet, 182 à 187, dans la première image I1 est associée un nuage de points, 382 à 387, dans la première scène S1.

A chaque image d'un objet, 284 à 288, dans la seconde image I2 est associé un nuage de points, 484 à 488, dans la seconde scène S2.

Puis, à l'étape 110, on détermine les valeurs des variables d'une transformation rigide permettant de faire coïncider les première et seconde scènes, S1 et S2, au moins sur le domaine de recouvrement 15 des champs d'observation 13 et 14 des deux caméras 11 et 12.

Dans ce mode de réalisation, il s'agit plus précisément d'identifier la transformation rigide permettant de superposer la seconde scène S2 sur la première scène S1, en considérant qu'un nuage de point de la première scène et un nuage de point de la second scène correspondent à un même objet de l'environnement, mais observé d'un point de vue différent.

Cette superposition est réalisée en utilisant comme variables d'ajustement, les variables de la transformation rigide, c'est-à-dire in fine les paramètres extrinsèques entre les deux caméras.

La superposition optimale des nuages de points des deux scènes reconstruites peut se faire par différents algorithmes connus, notamment des algorithmes géométriques. Par exemple l'algorithme ICP (« Iterative Closest Point ») cherche à minimiser une fonction de coût fondée sur la distance euclidienne entre les points de couples de points, chaque couple étant constitué d'un point de la première scène et d'un point de la seconde scène.

Avantageusement, la fonction de coût est augmentée d'une contribution liée à la couleur des pixels associés aux points d'un couple de points des scènes à comparer, lorsque ces dernières comportent une information de couleur. Cette variante est par exemple présentée dans l'article de Lepicka M. et al. « Utilization of Colour in ICP-based Point Cloud Registration », proceedings of the 9th International Conférence on Computer Récognition Systems, CORES 2015; advances in Intelligent Systems and Computing, vol 403. Springer.

L'étape 110 nécessite une instanciation initiale des valeurs des variables de la transformation rigide. Si aucune information n'est disponible, on peut par exemple faire débuter la procédure d'optimisation avec une position et une orientation relatives nulles entre les deux caméras. Dans le cas d'une recalibrage, on peut faire débuter la procédure d'optimisation avec les valeurs des paramètres extrinsèques telles que déterminées par la précédente itération du procédé de calibration, c'est-à-dire avec les valeurs des paramètres extrinsèques mémorisées dans l'espace 45.

Enfin, à l'étape 112, les valeurs des variables de la transformation identifiées à l'étape 110 comme minimisant la fonction de coût utilisée sont mémorisées, dans l'espace 45, en tant que valeurs des paramètres extrinsèques entre les première et seconde caméras.

### SECOND MODE DE REALISATION

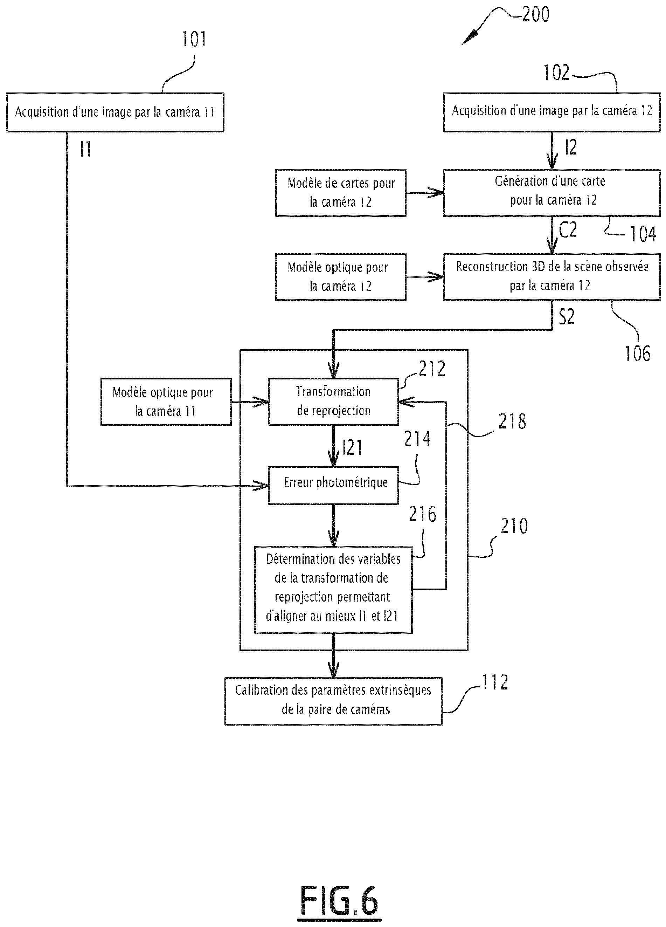

Un second mode de réalisation du procédé de calibration automatique selon l'invention est illustré par la figure 6. Une étape du procédé 200 de la figure 6 identique à une étape du procédé 100 de la figure 2 est identifiée par le même chiffre de référence.

De manière générale, dans ce second mode de réalisation, au lieu de superposer deux scènes dans l'espace à deux ou trois dimensions, une transformation de reprojection est appliquée par exemple sur la seconde scène afin d'obtenir une image reprojetée dans le repère de la première caméra. On cherche ensuite à aligner au mieux la première image et l'image reprojetée dans le plan image de la première caméra en jouant sur les variables de la transformation de reprojection. Les valeurs des paramètres extrinsèques sont celles qui conduisent à un optimum de cet alignement.

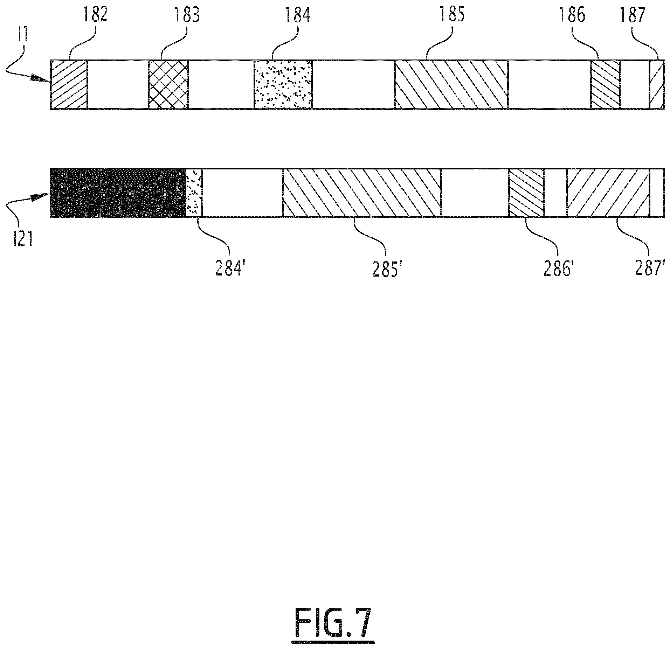

Plus précisément, le procédé 200 débute par une étape 101 au cours de laquelle la première caméra 11 acquière une première image I1 de la scène observée. Pour la situation de la figure 3, cette première image I1 est représentée sur la partie haute de la figure 4 et sur la partie haute de la figure 7. Les objets 82 et 87 qui se trouvent au moins partiellement dans le champ d'observation 13 sont vus par la première caméra 11 et les représentations de chacun de ces objets se retrouvent dans la première image I1. Elles sont référencées respectivement 182 à 187.

A l'étape 102, la seconde caméra 12 acquière une seconde image I2 de la scène observée. Pour la situation de la figure 3, cette seconde image I2 est représentée sur la partie basse de la figure 4. Les objets 84 et 88 qui se trouvent au moins partiellement dans le champ d'observation 14 sont vus par la seconde caméra 12 et les images de chacun de ces objets se retrouvent dans la seconde image I2, où elles sont référencées respectivement 284 à 288.

On considère que l'on dispose, pour la seconde caméra 12, d'un modèle d'estimation de cartes de profondeur denses métriques.

Alors, à l'étape 104, le modèle d'estimation de cartes de profondeur 42 de la seconde caméra 12 est lu dans la mémoire 26 et est utilisé pour générer une seconde carte de profondeur dense métrique, C2, à partir de l'image I2 acquise par la seconde caméra 12.

Puis, à l'étape 106, le second modèle optique 44 de la seconde caméra 12 est lu dans la mémoire 26 et est utilisé pour reconstruire, à partir de la seconde carte de profondeur dense métrique, C2, et éventuellement de la seconde image I2, une seconde scène tridimensionnelle S2 correspondant à la scène observée par la seconde caméra 12.

Puis, dans une étape 210, une transformation de reprojection est appliquée (sous-étape 212) sur la seconde carte C2 afin de la projeter dans le plan de formation des images de la première caméra 11. Cette transformation de reprojection tient compte du modèle optique de la première caméra 11. Cette transformation de reprojection est une transformation paramétrée par les variables de position et d'orientation relatives de la seconde caméra 12 par rapport à la première caméra 11.

A l'issue de l'étape 212, une seconde image reprojetée est obtenue, qui est notée I21.

Dans la variante selon laquelle une scène comporte une information de couleur, la transformation de reprojection propage cette information de couleur dans l'image reprojetée.

Pour la situation de la figure 3, cette seconde image reprojetée I21 est représentée sur la partie basse de la figure 7. Les objets 84 et 87 qui se trouvent au moins partiellement dans le domaine commun 15 se retrouvent dans la seconde image reprojetée I21. Les représentations de chacun de ces objets sont référencées respectivement 284' à 287'.

Il s'agit ensuite, au cours de la sous-étape 214, de calculer une fonction de coût évaluant l'écart d'alignement entre la première image I1 et la seconde image reprojetée I21. La fonction de coût dépend directement de la différence entre les valeurs des pixels des deux images à aligner. La fonction de coût est par exemple et de préférence une erreur de reprojection photométrique entre la première image I1 et la seconde image reprojetée I21. Là encore, la fonction de coût est avantageusement adaptée pour comporter une contribution liée à la couleur des pixels des images à comparer, lorsque ces dernières comportent une information de couleur.

Il s'agit enfin, au cours de la sous-étape 216, de modifier les valeurs des variables de la transformation de reprojection pour réduire l'erreur de reprojection photométrique.

Par une procédure itérative 218, les valeurs de la transformation de reprojection qui optimisent la fonction de coût sont déterminées. Ces valeurs optimales permettent le meilleur alignement possible entre les deux images comparées.

Enfin, à l'étape 112, les valeurs optimales sont mémorisées, dans l'espace 45, en tant que valeurs des paramètres extrinsèques entre les première et seconde caméras.

En variante, ce second mode de réalisation est symétrisé, c'est-à-dire que parallèlement à la reprojection de la seconde scène S2 dans le plan image de la première caméra 11, une première scène S1 est obtenue à partir de la première image I1 acquise par la première caméra 11, puis projetée dans le plan image de la seconde caméra 12.

Avantageusement, une fonction de coût globale est alors mise en œuvre qui tient compte non seulement de l'erreur de reprojection entre la seconde image reprojetée I21 et la première image I1, mais également de l'erreur de reprojection entre la première image reprojetée I12 et la seconde image I2. La fonction de coût globale est par exemple la somme de ces deux erreurs de reprojection photométeiques. Le résultat de l'optimisation de cette fonction de coût globale conduit alors à une valeur plus robuste des paramètres de calibration puisqu'un plus grand nombre de contraintes sont prises en compte simultanément.

### VARIANTES DE REALISATION

Dans les procédés présentés ci-dessus, l'étape de génération de carte et celle de reconstruction de scène sont distinctes. Cependant, en variante, une seule étape peut être mise en œuvre combinant ces deux opérations. Ceci est par exemple le cas, lorsque le modèle de cartes intègre déjà les caractéristiques optiques de la caméra associée.

Le procédé selon l'invention est applicable que le système soit mobile (typiquement un véhicule équipé de caméras) ou qu'il soit statique (typiquement un réseau de caméras de vidéosurveillance).

On suppose l'enregistrement des différentes caméras synchronisé, de sorte qu'un objet visible dans les différentes images a été observé au même instant par les différentes caméras (c'est-à-dire alors qu'il se trouvait dans une même position et orientation dans l'espace). Cette hypothèse peut être relâchée quand toutes les caméras restent statiques (comme c'est le cas pour un réseau de caméras de vidéosurveillance par exemple).

Pour une paire de caméras, le procédé peut fonctionner avec seulement une paire d'images, mais il est bien évidemment amélioré si l'on dispose d'une pluralité de M paires d'images. On réalise alors soit une optimisation globale prenant en compte les M paires d'images simultanément, soit une statistique sur les M ensembles de valeurs obtenues à l'issue de l'optimisation de chaque paire d'images indépendamment.

Le présent procédé est généralisable à un réseau de N caméras (N ≥ 2) rigidement liées et à champs recouvrants.

Ceci couvre le cas où les champs d'observation des N caméras se recouvrent sur un même domaine. Les fonctions de coût sont alors généralisées pour superposer les N nuages de points associés à un même objet ou à aligner les N représentations d'objet associées à un même objet.

Ceci couvre surtout le cas plus général où le champ d'observation de toute caméra recouvre au moins partiellement celui d'au moins une autre des caméras et que, de proche en proche, on puisse passer d'un champ d'observation à l'autre et parcourir les N champs d'observation. C'est par exemple le cas pour un réseau de caméras de vidéosurveillance permettant une surveillance sur 360° d'un bâtiment.

Dans tous les cas, il est avantageux de mettre en œuvre une fonction de coût globale permettant d'optimiser conjointement les différentes variables des transformations mises en œuvre, c'est-à-dire de rechercher conjointement les valeurs optimales des paramètres de calibration des N caméras du réseau.

Là encore, le procédé peut fonctionner avec seulement un N-uplet d'images, mais il est bien évidemment amélioré si l'on dispose d'une pluralité de M N-uplets d'images. On réalise alors soit un alignement global prenant en compte les M N-uplets d'images simultanément, soit une statistique sur les M valeurs obtenues à l'issue de l'optimisation sur chaque N-uplet d'images indépendamment.

Si, pour des raisons de clarté de l'exposé, on a considéré jusqu'à présent l'intégralité de la première image, de la seconde image, de la première image reconstruite et/ou de la seconde image reconstruite, l'invention s'applique lorsque l'on ne considère qu'une portion de ces images, à condition : de définir une portion d'image comme un ensemble de pixels comportant un grand nombre de pixels adjacents, qui forment un ensemble dense de pixels (dit autrement une surface continue de pixels) ; que les portions sélectionnées dans chaque image définissent des champs d'observation élémentaires qui se recouvrent au moins partiellement, pour pouvoir établir une corrélation entre les nuages de points qui sont associés à ces portions d'images par le modèle de cartes.

### APPLICATION

Les applications de la présente invention concernent tout domaine utilisant un réseau de caméras avec champs recouvrants, notamment le domaine de la conduite autonome (véhicules équipés de caméras couvrant de préférence 360°) ou encore celui de la vidéosurveillance (réseau de caméras fixées sur un bâtiment).

### AVANTAGES

L'invention permet d'automatiser et de simplifier la calibration extrinsèque d'un réseau de caméras, mais surtout à la recalibration de ces paramètres au cours de l'utilisation du système de vision par ordinateur.

Il permet une (re)calibration sans nécessitant de connaissance initiale sur la valeur de ces paramètres. Bien évidemment, lorsque des valeurs initiales des paramètres de calibration sont données, cela facilite d'autant la convergence de la procédure d'optimisation.

Le procédé est entièrement automatique et exécutable en temps réel.

Il s'applique à tout type de caméras, pourvu que soient connues les équations de projection et de reconstruction intrinsèques sur lesquelles se fonde le modèle d'estimation de cartes de profondeur dense métrique.

Le procédé selon l'invention ne passe pas par la détection de points d'intérêt particuliers dans les images acquises, mais met en œuvre l'étape de reconstruction d'une scène tridimensionnelle directement sur une image acquise et délivrée par une caméra.

Le procédé selon l'invention réalise un calcul dense à partir d'un grand nombre de pixels de chaque image. La recherche d'un maximum de coïncidence entre des scènes reconstruites comportant chacune un grand nombre de points permet au procédé d'atteindre une grande précision sur les valeurs des paramètres extrinsèques calculés. Cette précision est le principal facteur de la possibilité d'utiliser le présent procédé pour la recalibration d'un système de vision par ordinateur.

Il présente un coût nul, puisqu'il ne nécessite aucune instrumentation de la scène, ni l'emploi de capteurs additionnels.

## Revendications

1. Procédé de calibration automatique (100) des paramètres extrinsèques d'un réseau de caméras optiques comportant au moins une paire de caméras optiques, ladite paire de caméras optiques comportant une première caméra optique (11) et une seconde caméra optique (12), rigidement liées l'une par rapport à l'autre et à champs d'observation recouvrants, le procédé étant **caractérisé en ce qu'**il comporte les étapes consistant à, alors que l'on dispose d'un premier modèle d'estimation de cartes de profondeur denses métriques (41) pour la première caméra (11) et d'un second modèle d'estimation de cartes de profondeur denses métriques (42) pour la seconde caméra (12) :
- reconstruire (105) une première scène tridimensionnelle (S1) à partir d'une première portion d'une première image (I1) acquise par la première caméra (11) à un instant considéré, du premier modèle d'estimation de cartes de profondeur denses métriques et d'un modèle optique de la première caméra et reconstruire (106) une seconde scène tridimensionnelle (S2) à partir d'une seconde portion de la seconde image (I2) acquise par la seconde caméra (12) à l'instant considéré, du second modèle d'estimation de cartes de profondeur denses métriques et d'un modèle optique de la seconde caméra, la première portion de la première image et la seconde portion de la seconde image définissant respectivement des champs d'observation élémentaires qui se recouvrent mutuellement au moins partiellement, et la première portion de la première image et la seconde portion de la seconde image comportant chacune une pluralité de pixels adjacents formant un ensemble dense de pixels ;
- déterminer (110) les valeurs optimales des variables d'une transformation rigide permettant de superposer les première et seconde scènes tridimensionnelles (S1, S2) reconstruites ; et,
- mémoriser (112) les valeurs optimales déterminées en tant que valeurs des paramètres extrinsèques entre les première et seconde caméras.

2. Procédé de calibration automatique (200) des paramètres extrinsèques d'un réseau de caméras optiques comportant au moins une paire de caméras optiques, ladite paire de caméras optiques comportant une première caméra optique (11) et une seconde caméra optique (12), rigidement liées l'une par rapport à l'autre et à champs d'observation recouvrants, le procédé étant **caractérisé en ce qu'**il comporte les étapes consistant à, alors que l'on dispose d'un second modèle d'estimation de cartes de profondeur denses métriques (42) pour la seconde caméra (12) :
- reconstruire (106) une seconde scène tridimensionnelle (S2) à partir d'une seconde portion d'une seconde image (I2) acquise par la seconde caméra (12) à un instant considéré, du second modèle d'estimation de cartes de profondeur denses métriques et d'un modèle optique de la seconde caméra ;
- déterminer (210) les valeurs optimales des variables d'une transformation de reprojection permettant d'aligner une première portion d'une première image (I1) acquise par la première caméra (11) à l'instant considéré, et une seconde portion d'une seconde image reprojetée (I21) obtenue à partir de la seconde scène tridimensionnelle (S2) et d'un modèle optique de la première caméra (11), la première portion de la première image et la seconde portion de la seconde image définissant respectivement des champs d'observation élémentaires qui se recouvrent mutuellement au moins partiellement, et la première portion de la première image et la seconde portion de la seconde image comportant chacune une pluralité de pixels adjacents formant un ensemble dense de pixels ; et,
- mémoriser (112) les valeurs optimales déterminées en tant que valeurs des paramètres extrinsèques entre les première et seconde caméras.

3. Procédé selon la revendication 1, dans lequel déterminer (110) les valeurs optimales des variables d'une transformation rigide consiste à minimiser une fonction de coût fondée sur une distance euclidienne entre les points d'un couple de points d'une pluralité de couples de points, chaque couple de points associant un point de la première scène tridimensionnelle (S1) et un point de la seconde scène tridimensionnelle (S2).

4. Procédé selon la revendication 3, dans lequel la fonction de coût est fondée non seulement sur la distance euclidienne entre les points d'un couple de points d'une pluralité de couples de points, mais également sur une intensité des pixels associés auxdits points.

5. Procédé selon la revendication 2, dans lequel déterminer (210) les valeurs optimales des variables d'une transformation de reprojection consiste à minimiser une fonction de coût fondée sur une erreur photométrique entre la première portion de la première image (I1) et la seconde portion de la seconde image reprojetée (I21).

6. Procédé selon l'une quelconque des revendications 1 à 5, dans lequel une carte de profondeur denses métriques, élaborée à partir de la première portion de la première image et du premier modèle d'estimation de cartes de profondeur denses métriques (41) de la première caméra (11) ou à partir de la seconde portion de la seconde image et du second modèle d'estimation de cartes de profondeur denses métriques (42) de la seconde caméra (12), associe une information de profondeur à chaque pixel de la portion d'image correspondante.

7. Procédé selon l'une quelconque des revendications 1 à 6, dans lequel les paramètres extrinsèques comportent des coordonnées de position et d'orientation relatives entre un repère lié à la seconde caméra (12) et un repère lié à la première caméra (11).

8. Procédé selon l'une quelconque des revendications 1 à 7, dans lequel une caméra optique parmi les première et seconde caméras (11, 12) est une caméra couleur, une caméra niveaux de gris ou une caméra infra-rouge.

9. Procédé selon l'une quelconque des revendications 1 à 8, dans lequel reconstruire une scène tridimensionnelle s'effectue directement sur une portion d'image acquise par une caméra, sans avoir préalablement identifié des points d'intérêts particuliers dans ladite portion d'image.

10. Produit programme d'ordinateur (40) comportant des instructions logicielles qui, lorsqu'elles sont exécutées par un calculateur (20), mettent en œuvre un procédé de calibration automatique (100, 200) selon l'une quelconque des revendications 1 à 9.

11. Système de vision par ordinateur (20) comprenant un réseau de caméras optiques comportant au moins une paire de caméras optiques, ladite paire de caméras optiques comportant une première caméra optique (11) et une seconde caméra optique (12), rigidement liées l'une par rapport à l'autre et à champs d'observation recouvrants ; et un calculateur (20), **caractérisé en ce que** le calculateur est configuré pour mettent en œuvre un procédé de calibration automatique (100, 200) selon l'une quelconque des revendications 1 à 9 afin de calibrer ou de recalibrer les paramètres extrinsèques entre les première et seconde caméras optiques (11, 12).

12. Véhicule automobile (1), **caractérisé en ce qu'**il est équipé d'un système de vision par ordinateur (10) conforme au système de la revendication 11.
